# FASCICULE DE BREVET EUROPEEN

(11) **EP 3 131 815 B1**
(45) Date de publication et mention de la délivrance du brevet: **28.03.2018**
(21) Numéro de dépôt: 15721770.4
(22) Date de dépôt: 15.04.2015
(51) Int. Cl.: B64D 29/06, B64D 29/08, F02C 7/04

(54) **ENSEMBLE PROPULSIF POUR AÉRONEF**
ANTRIEBSBAUGRUPPE FÜR EIN FLUGZEUG
PROPULSION ASSEMBLY FOR AN AIRCRAFT

(30) Priorité: 17.04.2014 FR 1453493
(43) Date de publication de la demande: 22.02.2017
(73) Titulaire: Société Lorraine de Construction Aéronautique, 57190 Florange (FR)
(72) Inventeur: FAUGERAS, José, 78990 Elancourt (FR)
(74) Mandataire: Gaillarde, Frédéric F. Ch.
(86) Numéro de dépôt international: PCT/FR2015/051025
(87) Numéro de publication internationale: WO 2015/159026

(56) Documents cités:
- FR-A1- 2 757 823
- FR-A1- 2 916 425
- FR-A1- 2 926 537
- FR-A1- 2 927 061
- US-A1- 2002 195 827
- US-B1- 6 325 428

## Description

La présente invention concerne un ensemble propulsif pour aéronef comprenant une nacelle à structure amont mobile.

Un aéronef est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage.

Une nacelle présente généralement une structure sensiblement tubulaire comprenant une section amont définissant une entrée d'air, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

Dans la présente demande, l'amont et l'aval sont définis par rapport au sens d'écoulement de l'air dans l'ensemble propulsif en fonctionnement jet direct, l'entrée d'air étant située en amont par rapport à la tuyère d'éjection, située en aval de la nacelle.

Les opérations de maintenance du turboréacteur nécessitent un accès aisé au turboréacteur. Pour cela, la nacelle comprend généralement deux ouvertures situées au niveau de la paroi latérale de la section médiane de la nacelle, de part et d'autre du mât reliant le turboréacteur à l'aéronef.

Ces deux ouvertures sont chacune susceptibles d'être obturées grâce à deux demi-capots montés pivotants par rapport à un axe sensiblement parallèle à un axe longitudinal de la nacelle.

Ces demi-capots se déplacent entre une position fermée selon laquelle ils ferment les ouvertures de la nacelle, et une position ouverte selon laquelle ils ouvrent les ouvertures de la nacelle de façon à autoriser un accès au turboréacteur pour des opérations de maintenance, le maintien de ces demi-capots en position ouverte étant réalisé par l'intermédiaire de béquilles.

Un inconvénient de ce type de capot est que l'accès au turboréacteur se trouve limité par la présence des béquilles qui maintiennent les demi-capots en position ouverte. De plus, une fermeture inopinée de ces capots peut se produire à tout moment pendant une opération de maintenance, ce qui représente un danger important pour les opérateurs.

Pour pallier ces inconvénients, une solution de l'art antérieur, telle que celle décrite dans le document FR 2 930 763, consiste à prévoir une nacelle dont les sections amont et médiane forment un ensemble unitaire, déplaçable le long de rails montés sur le turboréacteur entre une position aval fermée assurant, avec une structure aval de la nacelle, la continuité aérodynamique de la nacelle, et une position amont ouverte permettant d'accéder au turboréacteur pour réaliser des opérations de maintenance.

Le maintien de la structure amont de la nacelle en position fermée est réalisé au niveau du mât rattachant l'ensemble propulsif à l'avion, grâce à une pluralité de crochets coopérant avec des éléments correspondants positionnés au niveau du mât.

Le déplacement de la structure amont de la nacelle depuis sa position aval fermée vers sa position amont ouverte est réalisée en deux temps. Tout d'abord, un opérateur déverrouille les crochets, puis ouvre plusieurs poignées configurées pour, lorsqu'elles sont en position ouverte, autoriser une légère rotation du capot afin de désolidariser les crochets des éléments du mât avec lesquels ils coopèrent.

Une fois la rotation du capot réalisée, le déplacement vers l'amont de la structure amont peut avoir lieu.

Ce type de structure permet avantageusement à un opérateur d'accéder plus facilement et sans danger au turboréacteur.

Toutefois, un premier inconvénient est que la cinématique d'ouverture est relativement longue et complexe.

Un deuxième inconvénient est que ce type de structure est fragile en raison des efforts aérodynamiques importants générés en vol au niveau de la zone proche de la lèvre d'entrée d'air de la nacelle, zone non reliée au reste de l'ensemble propulsif.

Une solution au problème de la fragilité de la structure pourrait être de prévoir des longerons longitudinaux disposés sur toute la longueur de la structure amont de la nacelle.

Cette solution est satisfaisante d'un point de vue structurel, en ce que la présence de longerons permet de reprendre les efforts aérodynamiques générés au niveau de la lèvre d'entrée d'air de la nacelle. Toutefois, de tels longerons augmentent considérablement la masse de la nacelle et leur présence n'est donc pas acceptable. Le document FR 2 926 537 décrit un ensemble propulsif pour aéronef comprenant une nacelle dans laquelle est logé un turboréacteur, la nacelle comprenant :
- une structure aval, et
- une structure amont, en amont de la structure aval, ladite structure amont comprenant :
   ∘ une entrée d'air comprenant une lèvre d'entrée d'air formant bord d'attaque de la nacelle, et
   ∘ un cadre de la lèvre d'entrée d'air définissant une cloison annulaire séparant la lèvre d'entrée d'air du reste de l'entrée d'air de la nacelle et définissant, avec la lèvre d'entrée d'air, un caisson d'entrée d'air,
la structure amont étant mobile en translation le long d'un axe sensiblement parallèle à un axe longitudinal de la nacelle, alternativement entre une position de fermeture selon laquelle elle assure une continuité aérodynamique avec la structure aval de la nacelle, et une position d'ouverture selon laquelle elle ouvre un passage dans la nacelle de façon à autoriser un accès au moins partiel au turboréacteur,
ledit ensemble propulsif comprenant en outre au moins un dispositif de verrouillage/déverrouillage adapté pour alternativement autoriser et interdire le déplacement de la structure amont par rapport à la structure aval, comprenant des moyens de verrouillage et de déverrouillage de la structure amont de la nacelle sur le turboréacteur. Dans ce document, la structure amont est montée coulissante sur des rails fixés par rapport au turboréacteur au moyen d'une paire de glissières espacées longitudinalement, et les moyens de verrouillage et déverrouillage sont fixés en proximité de la glissière aval et sur une bride du turboréacteur en position correspondante.

L'invention vise à résoudre des inconvénients structurels et aérodynamiques de cette solution connue, et se rapporte à cet effet à un ensemble propulsif pour aéronef du type sus-cité, qui se distingue de ladite solution en ce que les moyens de verrouillage et de déverrouillage sont fixés sur le cadre de la lèvre d'entrée d'air et sur une bride amont du turboréacteur.

Ainsi, en prévoyant un dispositif de verrouillage/déverrouillage comprenant des moyens de verrouillage et de déverrouillage de la structure amont de la nacelle, mobile en translation, par rapport au turboréacteur, positionnés au niveau du cadre de la lèvre d'entrée d'air et de la bride amont du turboréacteur, la nacelle résiste aux efforts aérodynamiques engendrés au niveau de la lèvre d'entrée d'air. Le positionnement des moyens de verrouillage et de déverrouillage au niveau d'une partie amont de la nacelle assure un verrouillage axial et un positionnement radial précis de la structure amont de la nacelle par rapport au turboréacteur, ce qui permet d'éviter de limiter les pertes aérodynamiques entre la lèvre d'entrée d'air et le turboréacteur.

Par ailleurs, en privilégiant une fixation des moyens de verrouillage et de déverrouillage directement sur le cadre de la lèvre d'entrée d'air, définissant une cloison annulaire séparant la lèvre d'entrée d'air du reste de l'entrée d'air de la nacelle, et non sur la lèvre d'entrée d'air elle-même, on augmente sensiblement la rigidité, au moins dans la direction radiale, de la fixation de la structure amont de la nacelle sur le turboréacteur.

En outre, la présente invention permet avantageusement de s'affranchir de la nécessité de longerons longitudinaux disposés tout le long de la structure amont de la nacelle, comme il peut être le cas dans l'art antérieur. En s'affranchissant de la nécessité de longerons longitudinaux disposés tout le long de la structure amont de la nacelle, la masse de la nacelle est considérablement réduite par rapport à l'art antérieur.

De plus, la sécurité du dispositif de verrouillage/déverrouillage est renforcée en ce que les moyens de verrouillage et de déverrouillage se trouvent en amont du carter de soufflante, dans une zone hors de celles qui peuvent être atteintes par des aubes de la soufflante en cas de rupture d'aubes de la soufflante et hors zone chaude. Ainsi, on réduit considérablement par rapport à l'art antérieur la probabilité d'une ouverture inopinée de la structure amont de la nacelle en plein vol, qui serait catastrophique.

Les moyens de verrouillage et de déverrouillage selon l'invention comprennent :
- une butée fixée sur la bride amont du turboréacteur, et
- un crochet de verrouillage solidaire de la structure amont de la nacelle, mobile entre une position de verrouillage selon laquelle il coopère avec ladite butée de façon à maintenir la structure amont de la nacelle en position de fermeture, et une position de déverrouillage selon laquelle il libère ladite butée de façon à autoriser un passage de la structure amont de la nacelle depuis sa position de fermeture vers sa position d'ouverture.

Le dispositif de verrouillage/déverrouillage selon l'invention comprend des moyens d'actionnement des moyens de verrouillage et de déverrouillage, comprenant une tige de commande dont une extrémité est reliée au crochet de verrouillage, conformée pour déplacer le crochet de verrouillage alternativement entre sa position de verrouillage et de déverrouillage.

En outre, les moyens de verrouillage et de déverrouillage comprennent un loquet de sécurité adapté pour former une butée de sécurité du crochet de verrouillage de façon à maintenir le crochet de verrouillage dans sa position de verrouillage, ce qui permet très avantageusement de renforcer la sécurité du dispositif de verrouillage/déverrouillage, et en conséquence d'éviter une ouverture inopinée de la structure amont de la nacelle lors d'une phase de vol de l'avion, qui serait catastrophique.

Par ailleurs, la tige de commande comprend des moyens pour déplacer le loquet de sécurité alternativement entre une position de verrouillage selon laquelle ledit loquet coopère avec le crochet de verrouillage et une position de déverrouillage selon laquelle ledit loquet libère le crochet de verrouillage.

Avantageusement, la même tige de commande agit à la fois sur le crochet de sécurité et sur le loquet de verrouillage.

Plus particulièrement, les moyens pour déplacer le loquet de sécurité, alternativement entre sa position de verrouillage et sa position de déverrouillage, comprennent un doigt de commande du loquet de sécurité solidaire de la tige de commande, ledit doigt étant également solidaire d'une bielle de sécurité reliée au loquet de sécurité de façon à entraîner, pour une course prédéterminée de la tige de commande, le loquet de sécurité alternativement entre sa position de verrouillage et sa position de déverrouillage.

Ainsi, la cinématique de déverrouillage de la structure amont de la nacelle se trouve largement simplifiée par rapport à l'art antérieur en ce que lorsque le dispositif de verrouillage/déverrouillage se trouve en position verrouillée, le déplacement de la tige de commande entraîne dans un premier temps le déverrouillage du loquet de sécurité, de façon à libérer le crochet de verrouillage puis, lorsque la tige de commande continue sa course, ladite tige déplace le crochet depuis sa position de verrouillage vers sa position de déverrouillage, autorisant le déplacement de la structure amont de la nacelle afin de réaliser des opérations de maintenance du turboréacteur.

Avantageusement, le doigt de commande du loquet de sécurité est monté dans un guide qui s'inscrit dans un support solidaire de la structure amont de la nacelle, ce qui permet de supporter le dispositif de verrouillage/déverrouillage en cas de rupture de la tige de commande. Ainsi, même en situation de rupture de la tige de commande, les moyens de verrouillage et de déverrouillage ne s'effondrent pas, et le doigt de commande du loquet de sécurité peut être déplacé manuellement par un opérateur.

Optionnellement, le loquet de sécurité comprend des moyens élastiques adaptés pour rappeler le loquet de sécurité en position de verrouillage.

Le montage du dispositif de verrouillage/déverrouillage est en outre simplifié en ce que le crochet de verrouillage et le loquet de sécurité sont montés pivotants autour d'axes sensiblement parallèles à un axe transverse à l'axe longitudinal de la nacelle.

Enfin, les moyens d'actionnement comprennent au moins une poignée de commande accessible directement depuis l'extérieur de la nacelle, adaptée pour entraîner la tige de commande en mouvement.

Une telle poignée, directement accessible depuis l'extérieur de la nacelle, permet d'agir directement sur le verrouillage et le déverrouillage du crochet de verrouillage, sans démontage préalable d'une partie de la nacelle.

L'accessibilité au turboréacteur lors d'opérations de maintenance en est ainsi largement facilitée par rapport à l'art antérieur, en ce qu'il n'est plus nécessaire de dégager la structure aval afin d'accéder au dispositif de verrouillage/déverrouillage de la structure amont.

D'autres caractéristiques, buts et avantages de la présente invention apparaîtront à la lecture de la description qui va suivre et à l'examen des figures ci-annexées, dans lesquelles :
- la figure 1 illustre un ensemble propulsif selon l'invention vu de côté, sur lequel la structure aval de la nacelle a été occultée ;
- les figures 2 et 3 représentent la nacelle de l'ensemble propulsif selon l'invention, respectivement en position de fermeture et en position d'ouverture selon laquelle la structure amont de la nacelle a translaté vers l'amont de la nacelle, la structure aval de la nacelle ayant là aussi été occultée ;
- la figure 4 est une vue en coupe longitudinale partielle de la structure amont de la nacelle représentée en position de fermeture, et de la zone du turboréacteur placée en vis-à-vis ;
- les figures 5 à 7 illustrent la cinématique d'ouverture de la structure amont de la nacelle ;
- la figure 8 illustre la cinématique de la rotation de la poignée de commande.

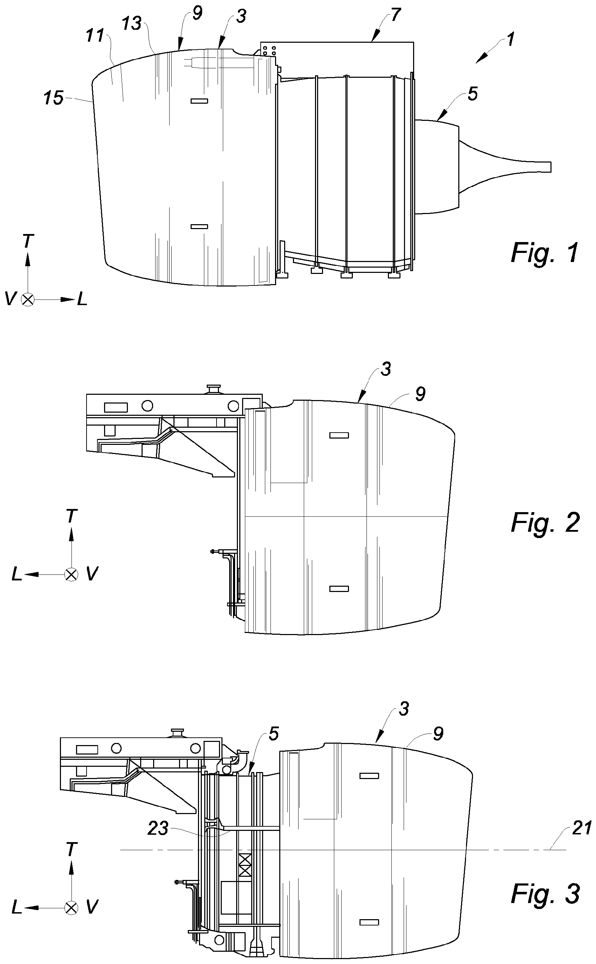

A noter que dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence aux figures 1 à 7.

De même, on utilisera à titre non limitatif les expressions « interne » et « externe » en référence à l'éloignement radial par rapport à l'axe longitudinal de la nacelle, l'expression « interne » définissant une zone radialement plus proche de l'axe longitudinal de la nacelle, par opposition à l'expression « externe ».

Par ailleurs, dans la description et les revendications, pour clarifier la description et les revendications, on adoptera à titre non limitatif la terminologie longitudinal, vertical et transversal en référence au trièdre direct L, V, T indiqué aux figures, dont l'axe longitudinal L est parallèle à l'axe longitudinal 21 de la nacelle représenté sur la figure 3.

En outre, sur l'ensemble des figures, des références identiques ou analogues représentent des organes ou ensembles d'organes identiques ou analogues.

On se réfère à la figure 1, représentant schématiquement un ensemble propulsif selon l'invention, sur lequel la structure aval de la nacelle a été occultée.

L'ensemble propulsif 1 selon l'invention comprend une nacelle 3 dans laquelle est logé un turboréacteur 5. L'ensemble propulsif 1 est destiné à être rattaché à une aile ou au fuselage de l'avion par un mât 7.

La nacelle 3 comprend une structure amont 9 et une structure aval, susceptible d'abriter des moyens d'inversion de poussée, occultée des figures, positionnée directement en aval de la structure amont 9.

La structure amont 9 de la nacelle 3 comprend une entrée d'air 11 prolongée en sa partie aval par un capot annulaire 13.

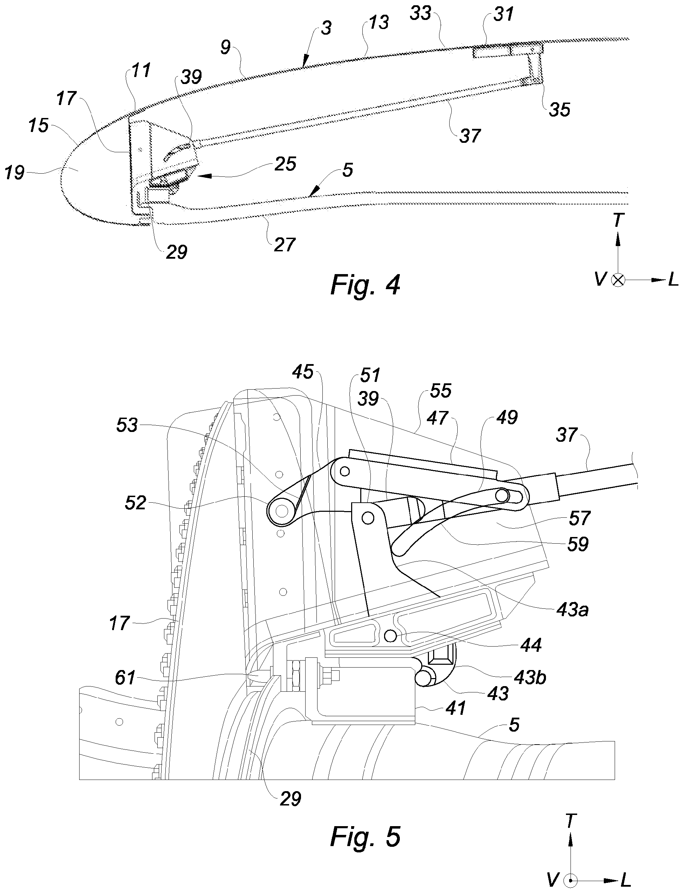

L'entrée d'air 11 comprend une lèvre d'entrée d'air 15 formant un bord d'attaque de la nacelle, et un cadre 17 de la lèvre d'entrée d'air définissant, avec la lèvre d'entrée d'air, un caisson 19 d'entrée d'air (le cadre 17 et le caisson 19 étant visibles sur la figure 4).

Le cadre 17 de la lèvre d'entrée d'air adopte une forme de cloison, par exemple annulaire. Cette cloison annulaire est positionnée directement en aval de la lèvre d'entrée d'air 15, c'est-à-dire que le cadre 17 définit la première cloison rencontrée dans la nacelle depuis la lèvre d'entrée d'air 15 lorsque l'on parcourt la nacelle de l'amont vers l'aval. En d'autres termes, le cadre 17 de la lèvre d'entrée d'air se présente sous la forme d'une cloison annulaire séparant la lèvre d'entrée d'air 15, formant bord d'attaque de la nacelle, du reste de l'entrée d'air 11 de la nacelle.

On se réfère aux figures 2 et 3, illustrant la nacelle 3 respectivement dans une position de fermeture et dans une position d'ouverture permettant de découvrir le turboréacteur 5 de façon à autoriser sa maintenance.

La structure amont 9 de la nacelle est mobile en translation le long d'un axe sensiblement parallèle à un axe longitudinal 21 de la nacelle. La translation de la structure amont 9 est par exemple réalisée grâce à un système rail/glissière connu de l'homme du métier, comprenant une pluralité de rails 23 supportés par le turboréacteur, par exemple quatre, par exemple répartis de manière équidistante sur la périphérie du turboréacteur, lesdits rails coopérant avec des glissières montées sur la structure amont de la nacelle.

La structure amont est mobile alternativement entre une position de fermeture aval, selon laquelle elle assure une continuité aérodynamique avec la structure aval (occultée des figures 2 et 3) de la nacelle, et une position d'ouverture amont, selon laquelle elle ouvre un passage dans la nacelle de façon à autoriser un accès au moins partiel au turboréacteur 5.

L'ensemble propulsif 1 est déplacé depuis sa position représentée sur la figure 2 vers sa position représentée sur la figure 3 afin de permettre la maintenance du turboréacteur. Lorsque l'avion est en fonctionnement, l'ensemble propulsif se trouve dans sa position fermée représentée sur la figure 2, c'est-à-dire que la structure amont 9 de la nacelle 3 assure la continuité aérodynamique avec la structure aval (non représentée) de la nacelle.

Afin d'assurer le maintien de l'ensemble propulsif dans la position fermée lorsque l'avion est en vol, et en conséquence d'empêcher une ouverture inopinée de la structure amont de la nacelle, qui serait catastrophique, et afin d'autoriser le passage de l'ensemble propulsif en position ouverte autorisant un accès au turboréacteur, l'ensemble propulsif selon l'invention est équipé de plusieurs dispositifs de verrouillage/déverrouillage 25, par exemple quatre, par exemple répartis de manière équidistante le long de la circonférence de l'ensemble propulsif.

Un dispositif de verrouillage/déverrouillage 25 est illustré à la figure 4, figure à laquelle on se réfère à présent.

La figure 4 est une vue en coupe longitudinale partielle de la structure amont 9 de la nacelle et de la zone du turboréacteur 5 placée en vis-à-vis.

Le dispositif de verrouillage/déverrouillage 25 est adapté pour alternativement autoriser et interdire le déplacement de la structure amont 9 de la nacelle par rapport à la structure aval de la nacelle.

Pour cela, le dispositif de verrouillage/déverrouillage 25 comprend des moyens de verrouillage et de déverrouillage de la structure amont 9 de la nacelle 3 sur le turboréacteur 5.

Lorsque l'avion se trouve dans une régime autre que celui de la maintenance du turboréacteur, la structure amont 9 est maintenue dans sa position fermée par l'intermédiaire de moyens de verrouillage adaptés pour maintenir ensemble la structure amont de la nacelle et le turboréacteur 5 au niveau d'une zone amont 27 du turboréacteur 5.

Selon l'invention, les moyens de verrouillage et de déverrouillage, décrits plus en détail dans la suite de la description, sont fixés sur le cadre 17 de la lèvre d'entrée d'air 15 et sur une bride amont 29 du turboréacteur 5.

Le dispositif de verrouillage/déverrouillage selon l'invention comprend également des moyens d'actionnement des moyens de verrouillage et de déverrouillage, ces moyens d'actionnement permettant de faire passer alternativement le dispositif de verrouillage/déverrouillage entre une position verrouillée selon laquelle il maintient ensemble la structure amont de la nacelle et le turboréacteur de façon à interdire tout mouvement relatif entre la structure amont et le turboréacteur, et une position déverrouillée selon laquelle il libère la structure amont de la nacelle de façon à autoriser son déplacement.

Selon l'invention, ces moyens d'actionnement comprennent une poignée de commande 31 directement accessible depuis l'extérieur de la nacelle, sans manutention de la nacelle, affleurant avec la paroi externe 33 de la structure amont 9 de la nacelle lorsque la structure amont se trouve en position de fermeture.

La poignée de commande 31 est montée pivotante sur un axe sensiblement transverse à l'axe longitudinal de la nacelle. La poignée 31 présente une forme sensiblement de « L » et est reliée à une extrémité 35 d'une tige de commande 37, de façon à ce que le pivotement de la poignée de commande 31 entraîne un déplacement en translation de la tige de commande 37.

La tige de commande est positionnée entre le capot annulaire 13 prolongeant l'entrée d'air 11 de la nacelle, et la zone amont 27 du turboréacteur, lorsque la structure amont 9 de la nacelle se trouve en position fermée.

La tige de commande 37 est elle-même reliée en son extrémité 39 aux moyens de verrouillage et de déverrouillage illustrés sur la figure 5, figure à laquelle on se réfère à présent.

Sur la figure 5, la lèvre d'entrée d'air 15 et le capot annulaire 13 qui la prolonge ont été occultés, et les moyens de verrouillage et de déverrouillage sont représentés en position de verrouillage selon laquelle la structure amont de la nacelle est maintenue sur le turboréacteur.

Les moyens de verrouillage et de déverrouillage comprennent une butée 41 fixée sur la bride amont 29 du turboréacteur, et un crochet de verrouillage 43 en prise avec l'extrémité 39 de la tige de commande 37.

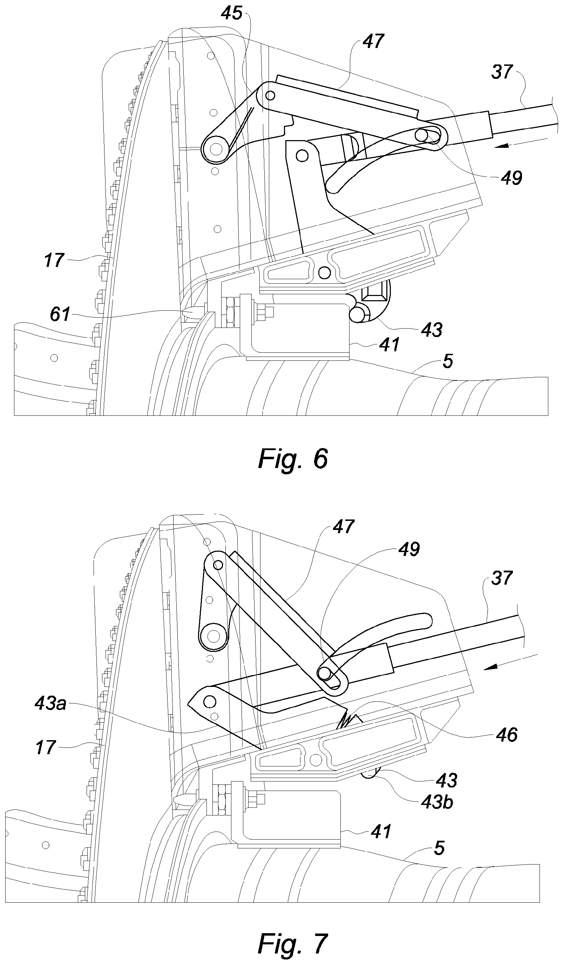

Plus précisément, le crochet de verrouillage 43 est solidaire de la structure amont de la nacelle, et est monté pivotant sur un axe 44 sensiblement parallèle à un axe transverse à l'axe longitudinal de la nacelle, entraîné en rotation par l'extrémité 39 de la tige de commande 37, entre une position de verrouillage représentée sur la figure 5, selon laquelle il coopère avec la butée 41 de façon à maintenir la structure amont de la nacelle en position de fermeture, et une position de déverrouillage (visible sur la figure 7) selon laquelle il libère ladite butée de façon à autoriser un passage de la structure amont de la nacelle depuis sa position de fermeture vers sa position d'ouverture.

Plus précisément, le crochet de verrouillage 43 comprend une partie 43a reliée à l'extrémité 39 de la tige de commande 37, séparée d'une partie 43b par l'intermédiaire d'un ressort de compression 46 (visible sur la figure 7) précontraint permettant le rattrapage des jeux et maintenant une pression du crochet de verrouillage 43 sur la butée 41 lorsque le crochet se trouve dans sa position de verrouillage selon laquelle il coopère avec la butée 41.

Les moyens de verrouillage et de déverrouillage comprennent en outre un loquet de sécurité 45 relié à la tige de commande 37 par l'intermédiaire d'une bielle de sécurité 47 en prise avec un doigt de commande 49 du loquet de sécurité solidaire de la tige de commande.

Dans la position illustrée sur la figure 5, selon laquelle à la fois le loquet de sécurité 45 et le crochet de verrouillage 43 sont représentés en position de verrouillage, la portion extrême 51 du crochet de verrouillage 43 coopère avec le loquet de sécurité 45, constituant ainsi une butée de sécurité empêchant tout mouvement du crochet de verrouillage 43 lorsque la structure amont se trouve dans sa position de fermeture. Le crochet de verrouillage 43 appuie alors sur la butée 41, de sorte que le mouvement de la structure amont de la nacelle vers l'amont de la nacelle est interdit.

Le loquet de sécurité 45 est monté pivotant sur une tige 52 constituant une liaison pivot d'axe sensiblement parallèle à un axe transverse à l'axe longitudinal de la nacelle.

Le maintien du loquet de sécurité 45 dans sa position de verrouillage est réalisé grâce à des moyens élastiques tels qu'un ressort de torsion 53 qui s'enroule sur la tige 52, rappelant en permanence le loquet de sécurité dans sa position de verrouillage.

La tige 52 est supportée par un support 55 fixé sur le cadre 17 de la lèvre d'entrée d'air. Un tel support 55 est par exemple constitué par une portion de longeron, et présente une section transverse sensiblement en forme de U.

La cinématique de déverrouillage va à présent être décrite, en référence aux figures 4 à 7.

L'opérateur se saisit de la poignée de commande 31 et exerce une rotation de la poignée dans le sens horaire. La rotation de la poignée de commande 31 entraîne le déplacement en translation de la tige de commande 37 vers l'amont de la nacelle.

Comme illustré sur la figure 6, le déplacement de la tige de commande 37 de quelques millimètres, par exemple 8 mm, vers l'amont de la nacelle, entraîne dans un premier temps le déplacement du doigt de commande 49 du loquet de sécurité de quelques millimètres, sans entraîner le pivotement du crochet de verrouillage 43. Le doigt de commande du loquet sécurité, solidaire de la tige de commande, entraîne le pivotement de la bielle de sécurité 47, entraînant elle-même le pivotement du loquet de sécurité 45, permettant d'entraîner le déplacement du loquet de sécurité depuis sa position de verrouillage vers sa position de déverrouillage.

A ce stade du processus de déverrouillage, le crochet 43 se trouve toujours en position verrouillée, c'est-à-dire qu'il coopère toujours avec la butée 41, de sorte que le déplacement de la structure amont de la nacelle vers l'amont n'est pas autorisé.

En poursuivant la rotation de la poignée de commande 31, la tige de commande 37 continue de se déplacer vers l'amont de la nacelle, comme illustré sur la figure 7, ce qui permet d'entraîner le pivotement du crochet de verrouillage 43.

Le pivotement du crochet de verrouillage 43 libère alors la butée 41 et ne coopère plus avec la butée 41, rendant possible le déplacement de la structure amont de la nacelle vers l'amont de la nacelle.

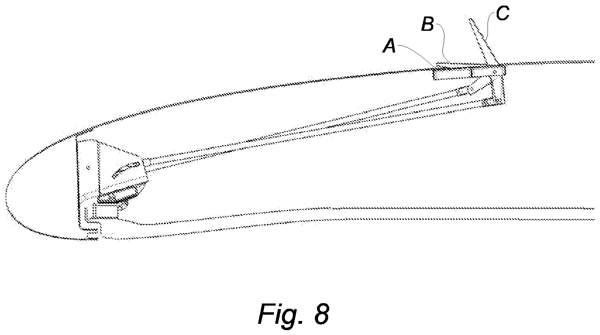

La cinématique de rotation de la poignée de commande 31 est illustrée sur la figure 8 sur laquelle sont représentées les trois positions A, B et C de la poignée, correspondant respectivement à une position de verrouillage du crochet de verrouillage et du loquet de sécurité, à une position de verrouillage du crochet de verrouillage et une position de déverrouillage du loquet de sécurité, et à une position de déverrouillage du crochet de verrouillage et du loquet de sécurité.

Les opérations de maintenance du turboréacteur peuvent ainsi être réalisées.

Un tel déplacement de la structure amont de la nacelle peut être réalisé soit manuellement grâce à la poignée de commande 31, soit automatiquement par l'intermédiaire de moyens d'actionnement tels que des vérins, non représentés.

Comme visible sur les figures 5 à 7, le support 55 comprend en outre sur chacune de ses parois latérales 57 un guide 59 s'inscrivant dans un plan XZ et présentant un profil sensiblement circulaire.

Le guide 59 est conformé pour recevoir le doigt de commande 49 du loquet de sécurité sur lequel est montée la bielle de sécurité 47, ce qui permet de maintenir les moyens de verrouillage/déverrouillage en cas de rupture de la tige de commande 37.

Le doigt de commande 49 du loquet de sécurité peut être monté de façon à traverser le guide 59, et peut alors servir de moyen pour déplacer manuellement la bielle de sécurité 47 en cas de rupture de la tige de commande 39. Le déplacement manuel de la bielle de sécurité est effectué en déplaçant manuellement le doigt de commande 49 du loquet de sécurité par exemple grâce à une tige, au moyen d'une tige. Le déplacement de manuel du doigt de commande 49 du loquet de sécurité entraîne alors le pivotement de la bielle de sécurité 47, et de concert le pivotement du loquet de sécurité 45.

Lorsque les opérations de maintenance sont terminées, l'opérateur ramène la structure amont de la nacelle dans sa position aval de fermeture, selon laquelle elle définit, avec la structure aval de la nacelle, une continuité aérodynamique.

Le verrouillage de la structure amont de la nacelle sur le turboréacteur est réalisé de la façon suivante.

L'opérateur ramène la structure amont de la nacelle dans sa position selon laquelle elle coopère avec le turboréacteur, position représentée sur les figures 4 à 7. Le bon alignement de la structure amont de la nacelle par rapport au turboréacteur est assuré grâce à des centreurs 61 fixés sur la bride amont 29 du turboréacteur, engageant des alésages positionnés en vis-à-vis sur le cadre de la lèvre d'entrée d'air.

L'opérateur fait ensuite pivoter la poignée de commande 31 dans le sens anti-horaire, ce qui a pour effet de déplacer la tige de commande 37 vers l'aval de la nacelle, et d'entraîner dans un premier temps le pivotement du crochet de verrouillage 43 depuis sa position représentée sur la figure 7 jusqu'à sa position représentée sur la figure 6, selon laquelle le crochet 43 coopère avec la butée 41. Le loquet de sécurité 45 se trouve toujours en position déverrouillée jusqu'à ce que le pivotement de la poignée de commande 31 ait entraîné le déplacement vers l'aval du doigt de commande 49 du loquet de sécurité, entraînant à son tour le pivotement de la bielle de sécurité 47 et, de concert, celui du loquet de sécurité 45, jusqu'à ce que ledit crochet coopère avec le crochet de verrouillage 43.

Alternativement à ce qui vient d'être décrit, les moyens de verrouillage et de déverrouillage sont dépourvus de loquet de sécurité, et le maintien de la structure amont de la nacelle sur le turboréacteur est réalisé uniquement par le crochet de verrouillage monté à l'extrémité de la tige de commande.

Grâce à la présente invention, la nacelle résiste aux efforts aérodynamiques engendrés au niveau de la lèvre d'entrée d'air tout en s'affranchissant de la nécessité de longerons longitudinaux disposés tout le long de la structure amont de la nacelle, ce qui permet de réduire considérablement la masse de la nacelle par rapport à l'art antérieur.

De plus, la sécurité de la nacelle est renforcée en ce que les moyens de verrouillage et de déverrouillage de la structure amont de la nacelle se trouvent en amont du carter de soufflante, dans une zone hors de celles qui peuvent être atteintes par des aubes de la soufflante en cas de rupture d'aubes de la soufflante et hors zone chaude.

Ainsi, le risque d'une ouverture inopinée de la structure amont de la nacelle en plein vol, qui serait catastrophique, est considérablement réduit par rapport à l'art antérieur.

Par ailleurs, comme précédemment décrit, la cinématique de déverrouillage de la structure amont de la nacelle se trouve largement simplifiée par rapport à l'art antérieur.

Enfin, par la présence d'une poignée de commande directement accessible depuis l'extérieur de la nacelle, une action directe sur le verrouillage et le déverrouillage du crochet de verrouillage, sans démontage préalable d'une partie de la nacelle, est désormais possible, ce qui simplifie largement l'accessibilité au turboréacteur lors d'opérations de maintenance.

Comme il va de soi, l'invention ne se limite pas aux seules formes de réalisation de l'ensemble propulsif, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Ensemble propulsif (1) pour aéronef comprenant une nacelle (3) dans laquelle est logé un turboréacteur (5), la nacelle comprenant :
- une structure aval, et
- une structure amont (9), en amont de la structure aval, ladite structure amont comprenant :
o une entrée d'air (11) comprenant une lèvre d'entrée d'air (15) formant bord d'attaque de la nacelle, et
o un cadre (17) de la lèvre d'entrée d'air définissant une cloison annulaire séparant la lèvre d'entrée d'air (15) du reste de l'entrée d'air (11) de la nacelle et définissant, avec la lèvre d'entrée d'air (15), un caisson (19) d'entrée d'air,
la structure amont (9) étant mobile en translation le long d'un axe sensiblement parallèle à un axe longitudinal (21) de la nacelle, alternativement entre une position de fermeture selon laquelle elle assure une continuité aérodynamique avec la structure aval de la nacelle, et une position d'ouverture selon laquelle elle ouvre un passage dans la nacelle de façon à autoriser un accès au moins partiel au turboréacteur (5),
ledit ensemble propulsif (1) comprenant en outre au moins un dispositif de verrouillage/déverrouillage (25) adapté pour alternativement autoriser et interdire le déplacement de la structure amont (9) par rapport à la structure aval, comprenant des moyens de verrouillage et de déverrouillage de la structure amont de la nacelle sur le turboréacteur,
ledit ensemble propulsif étant **caractérisé en ce que** les moyens de verrouillage et de déverrouillage sont fixés sur le cadre (17) de la lèvre d'entrée d'air et sur une bride amont (29) du turboréacteur.

2. Ensemble propulsif (1) selon la revendication 1, **caractérisé en ce que** les moyens de verrouillage et de déverrouillage comprennent :
- une butée (41) fixée sur la bride amont (29) du turboréacteur, et
- un crochet de verrouillage (43) solidaire de la structure amont (9) de la nacelle (3), mobile entre une position de verrouillage selon laquelle il coopère avec ladite butée (41) de façon à maintenir la structure amont (9) de la nacelle en position de fermeture, et une position de déverrouillage selon laquelle il libère ladite butée de façon à autoriser un passage de la structure amont de la nacelle depuis sa position de fermeture vers sa position d'ouverture.

3. Ensemble propulsif (1) selon la revendication 2, **caractérisé en ce que** le dispositif de verrouillage/déverrouillage (25) comprend des moyens d'actionnement des moyens de verrouillage et de déverrouillage, comprenant une tige de commande (37) dont une extrémité (39) est reliée au crochet de verrouillage (43), conformée pour déplacer le crochet de verrouillage alternativement entre sa position de verrouillage et de déverrouillage.

4. Ensemble propulsif (1) selon l'une des revendications 2 ou 3, **caractérisé en ce que** les moyens de verrouillage et de déverrouillage comprennent en outre un loquet de sécurité (45) adapté pour former une butée de sécurité du crochet de verrouillage (43) de façon à maintenir le crochet de verrouillage dans sa position de verrouillage.

5. Ensemble propulsif (1) selon la revendication 4, **caractérisé en ce que** la tige de commande (37) comprend des moyens pour déplacer le loquet de sécurité (45) alternativement entre une position de verrouillage selon laquelle ledit loquet coopère avec le crochet de verrouillage (43) et une position de déverrouillage selon laquelle ledit loquet libère le crochet de verrouillage.

6. Ensemble propulsif (1) selon la revendication 5, **caractérisé en ce que** lesdits moyens pour déplacer le loquet de sécurité, alternativement entre sa position de verrouillage et sa position de déverrouillage, comprennent un doigt de commande (49) du loquet de sécurité (45) solidaire de la tige de commande (37), ledit doigt étant également solidaire d'une bielle de sécurité (47) reliée au loquet de sécurité (45) de façon à entraîner, pour une course prédéterminée de la tige de commande (37), le loquet de sécurité (45) alternativement entre sa position de verrouillage et sa position de déverrouillage.

7. Ensemble propulsif (1) selon la revendication 6, **caractérisé en ce que** le doigt de commande (49) du loquet de sécurité est monté dans un guide (59) qui s'inscrit dans un support (55) solidaire de la structure amont (9) de la nacelle.

8. Ensemble propulsif (1) selon l'une quelconque des revendications 4 à 7, **caractérisé en ce que** le loquet de sécurité (47) comprend des moyens élastiques adaptés pour rappeler le loquet de sécurité en position de verrouillage.

9. Ensemble propulsif (1) selon l'une quelconque des revendications 4 à 8, **caractérisé en ce que** le crochet de verrouillage (43) et le loquet de sécurité (45) sont montés pivotants autour d'axes sensiblement parallèles à un axe transverse à l'axe longitudinal (21) de la nacelle.

10. Ensemble propulsif (1) selon l'une quelconque des revendications 3 à 9, **caractérisé en ce que** les moyens d'actionnement des moyens de verrouillage et de déverrouillage comprennent au moins une poignée de commande (31) accessible directement depuis l'extérieur de la nacelle, ladite poignée étant adaptée pour entraîner la tige de commande (37) en mouvement.

## Patentansprüche

1. Antriebsbaugruppe (1) für ein Flugzeug, umfassend eine Gondel (3), in der ein Turbinen-Strahltriebwerk (5) untergebracht ist, wobei die Gondel umfasst:
- eine stromabwärts liegende Struktur und
- eine stromaufwärts liegende Struktur (9), die stromaufwärts von der stromabwärts liegenden Struktur liegt, wobei die stromaufwärts liegende Struktur umfasst:
-- einen Lufteinlauf (11), umfassend eine Lufteinlauflippe (15), die eine Anströmkante der Gondel bildet, und
-- einen Rahmen (17) der Lufteinlauflippe, der eine ringförmige Trennwand definiert, die die Lufteinlauflippe (15) von dem Rest des Lufteinlaufs (11) der Gondel trennt und die mit der Lufteinlauflippe (15) einen Kasten (19) für den Lufteinlauf definiert,
wobei die stromaufwärts liegende Struktur (9) entlang einer Achse verschiebbar ist, die im Wesentlichen parallel zu einer Längsachse (21) der Gondel verläuft, abwechselnd zwischen einer Schließposition, in der sie eine aerodynamische Kontinuität mit der stromabwärts liegenden Struktur sicherstellt, und einer Öffnungsposition, in der sie einen Durchgang in der Gondel öffnet, um mindestens einen teilweisen Zugang zu dem Turbinen-Strahltriebwerk (5) zuzulassen,
wobei die Antriebsbaugruppe (1) ferner mindestens eine Vorrichtung zur Verriegelung/Entriegelung (25) umfasst, die angepasst ist, um die Verschiebung der stromaufwärts liegenden Struktur (9) in Bezug auf die stromabwärts liegende Struktur abwechselnd zuzulassen und zu verhindern, umfassend Mittel zur Verriegelung und zur Entriegelung der stromaufwärts liegenden Struktur der Gondel auf dem Turbinen-Strahltriebwerk,
wobei die Antriebsbaugruppe **dadurch gekennzeichnet ist, dass** die Mittel zur Verriegelung und zur Entriegelung auf dem Rahmen (17) der Lufteinlauflippe und auf einem stromaufwärts liegenden Flansch (29) des Turbinen-Strahltriebwerks befestigt sind.

2. Antriebsbaugruppe (1) nach Anspruch 1, **dadurch gekennzeichnet, dass** die Mittel zur Verriegelung und zur Entriegelung umfassen:
- einen Anschlag (41), der auf dem stromaufwärts liegenden Flansch (29) des Turbinen-Strahltriebwerks befestigt, und
- einen Verriegelungshaken (43), der mit der stromaufwärts liegenden Struktur (9) der Gondel (3) fest verbunden ist und der zwischen einer Verriegelungsposition, in der er mit dem Anschlag (41) zusammenwirkt, um die stromaufwärts liegende Struktur (9) der Gondel in Schließposition zu halten, und einer Entriegelungsposition beweglich ist, in der er den Anschlag freigibt, um einen Übergang der stromaufwärts liegenden Struktur der Gondel ausgehend von ihrer Schließposition in ihre Öffnungsposition zuzulassen.

3. Antriebsbaugruppe (1) nach Anspruch 2, **dadurch gekennzeichnet, dass** die Vorrichtung zur Verriegelung/Entriegelung (25) Betätigungsmittel für die Mittel zur Verriegelung und zur Entriegelung umfasst, umfassend eine Steuerstange (37), von der ein Ende (39) mit dem Verriegelungshaken (43) verbunden ist, ausgeführt, um den Verriegelungshaken abwechselnd zwischen seiner Verriegelungs- und Entriegelungsposition zu verschieben.

4. Antriebsbaugruppe (1) nach einem der Ansprüche 2 oder 3, **dadurch gekennzeichnet, dass** die Mittel zur Verriegelung und zur Entriegelung ferner eine Sicherheitsarretierung (45) umfassen, die angepasst ist, um einen Sicherheitsanschlag des Verriegelungshakens (43) zu bilden, um den Verriegelungshaken in seiner Verriegelungsposition zu halten.

5. Antriebsbaugruppe (1) nach Anspruch 4, **dadurch gekennzeichnet, dass** die Steuerstange (37) Mittel umfasst, um die Sicherheitsarretierung (45) abwechselnd zwischen einer Verriegelungsposition, in der die Arretierung mit dem Verriegelungshaken (43) zusammenwirkt, und einer Entriegelungsposition zu verschieben, in der die Arretierung den Verriegelungshaken freigibt.

6. Antriebsbaugruppe (1) nach Anspruch 5, **dadurch gekennzeichnet, dass** die Mittel zum Verschieben der Sicherheitsarretierung, abwechselnd zwischen ihrer Verriegelungsposition und ihrer Entriegelungsposition, einen Steuerfinger (49) für die Sicherheitsarretierung (45) umfassen, der mit der Steuerstange (37) fest verbunden ist, wobei der Finger ebenfalls mit einem Sicherheitsgestänge (47) fest verbunden ist, das mit der Sicherheitsarretierung (45) verbunden ist, um, über einen vorbestimmten Weg der Steuerstange (37), die Sicherheitsarretierung (45) abwechselnd zwischen ihrer Verriegelungsposition und ihrer Entriegelungsposition hin und her zu treiben.

7. Antriebsbaugruppe (1) nach Anspruch 6, **dadurch gekennzeichnet, dass** der Steuerfinger (49) der Sicherheitsarretierung in einer Führung (59) angebracht ist, die sich in eine Halterung (55) einfügt, die mit der stromaufwärts liegenden Struktur (9) der Gondel fest verbunden ist.

8. Antriebsbaugruppe (1) nach einem der Ansprüche 4 bis 7, **dadurch gekennzeichnet, dass** die Sicherheitsarretierung (47) elastische Mittel umfasst, die angepasst sind, um die Sicherheitsarretierung in Verriegelungsposition zurückzustellen.

9. Antriebsbaugruppe (1) nach einem der Ansprüche 4 bis 8, **dadurch gekennzeichnet, dass** der Verriegelungshaken (43) und die Sicherheitsarretierung (45) schwenkend um Achsen angebracht sind, die im Wesentlichen parallel zu einer Achse verlaufen, die quer zu der Längsachse (21) der Gondel verläuft.

10. Antriebsbaugruppe (1) nach einem der Ansprüche 3 bis 9, **dadurch gekennzeichnet, dass** die Betätigungsmittel für die Mittel zur Verriegelung und zur Entriegelung mindestens einen Steuergriff (31) umfassen, der von außerhalb der Gondel direkt zugänglich ist, wobei der Griff angepasst ist, um die Steuerstange (37) in Bewegung zu setzen.

## Claims

1. A propulsion unit (1) for an aircraft comprising a nacelle (3) in which is housed a turbojet engine (5), the nacelle comprising:
- a downstream structure, and
- an upstream structure (9), upstream of the downstream structure, said upstream structure comprising:
∘ an air inlet (11) comprising an air inlet lip (15) forming a leading edge of the nacelle, and
∘ a frame (17) of the air inlet lip defining an annular partition separating the air inlet lip (15) from the rest of the air inlet (11) of the nacelle and defining, with the air inlet lip (15), an air inlet box (19),
the upstream structure (9) being movable in translation along an axis substantially parallel to a longitudinal axis (21) of the nacelle, alternately between a closing position according to which it ensures an aerodynamic continuity with the downstream structure of the nacelle, and an opening position according to which it opens a passage in the nacelle so as to allow at least partial access to the turbojet engine (5),
said propulsion unit (1) further comprising at least one locking/unlocking device (25) adapted to alternately allow and prevent the displacement of the upstream structure (9) with respect to the downstream structure, comprising locking and unlocking means of the upstream structure of the nacelle on the turbojet engine,
said propulsion unit is **characterized in that** the locking and unlocking means are fastened on the frame (17) of the air inlet lip and on an upstream flange (29) of the turbojet engine.

2. The propulsion unit (1) according to claim 1, **characterized in that** the locking and unlocking means comprise:
- a stop (41) fastened on the upstream flange (29) of the turbojet engine, and
- a locking hook (43) secured to the upstream structure (9) of the nacelle (3), movable between a locking position according to which it cooperates with said stop (41) so as to hold the upstream structure (9) of the nacelle in the closing position, and an unlocking position according to which it releases said stop so as to allow a passage of the upstream structure of the nacelle from its closing position to its opening position.

3. The propulsion unit (1) according to claim 2, **characterized in that** the locking/unlocking device (25) comprises actuating means of the locking and unlocking means, comprising a control rod (37) one end (39) of which is linked to the locking hook (43), shaped to displace the locking hook in reciprocation between the locking and unlocking position thereof.

4. The propulsion unit (1) according to any of claims 2 or 3, **characterized in that** the locking and unlocking means further comprise a safety latch (45) adapted to form a safety stop of the locking hook (43) so as to hold the locking hook in the locking position thereof.

5. The propulsion unit (1) according to claim 4, **characterized in that** the control rod (37) comprises means for displacing the safety latch (45) in reciprocation between a locking position according to which said latch cooperates with the locking hook (43) and an unlocking position according to which said latch releases the locking hook.

6. The propulsion unit (1) according to claim 5, **characterized in that** said means for displacing the safety latch, alternately between its locking position and its unlocking position, comprise a control finger (49) of the safety latch (45) secured to the control rod (37), said finger also being secured to a safety connecting rod (47) connected to the safety latch (45) so as to drive, for a predetermined stroke of the control rod (37), the safety latch (45) in reciprocation between its locking position and its unlocking position.

7. The propulsion unit (1) according to claim 6, **characterized in that** the control finger (49) of the safety latch is mounted in a guide (59) which is part of a support (55) secured to the upstream structure (9) of the nacelle.

8. The propulsion unit (1) according to any one of claims 4 to 7, **characterized in that** the safety latch (47) comprises elastic means adapted to return the safety latch to the locking position.

9. The propulsion unit (1) according to any one of claims 4 to 8, **characterized in that** the locking hook (43) and the safety latch (45) are pivotally mounted about axes substantially parallel to a transverse axis to the longitudinal axis (21) of the nacelle.

10. the propulsion unit (1) according to any one of claims 3 to 9, **characterized in that** the actuating means of the locking and unlocking means comprise at least one control handle (31) accessible directly from the outside of the nacelle, said handle being adapted to drive the control rod (37) in movement.
